# EUROPÄISCHE PATENTANMELDUNG

(11) **EP 2 157 362 A1**
(43) Veröffentlichungstag der Anmeldung: **24.02.2010**
(21) Anmeldenummer: 08162131.0
(22) Anmeldetag: 11.08.2008
(51) Int. Cl.: F21S 8/10, F21V 14/08, F21W 101/10

(54) **Projektionsscheinwerferanordnung für Fahrzeuge**

(71) Anmelder: Hella KGaA Hueck & Co., 59552 Lippstadt (DE)
(72) Erfinder: Ehm, Matthias, 59558, Lippstadt (DE)

(57) **Zusammenfassung**

Die Erfindung betrifft Projektionsscheinwerferanordnung für Fahrzeuge mit einem linken Projektionsscheinwerfer und mit einem rechten Projektionsscheinwerfer, die jeweils enthalten: einen zwei Brennorte aufweisenden Reflektor, eine in einem ersten Brennort des Reflektors angeordnete Lichtquelle, eine dem Reflektor in Lichtabstrahlrichtung vorgelagerte Linse, deren Brennpunkt in der Nähe des zweiten Brennportes des Reflektors angeordnet ist und eine zwischen der Linse und dem Reflektor angeordnete Blendenwelle, die mittels einer Stelleinheit um eine horizontale und quer zur optischen Achse verlaufenden Drehachse in mehrere Drehstellungen verstellbar ist, wobei den Drehstellungen jeweils eine Blendkante der Blendenwelle zugeordnet ist zur Erstellung einer Hell-Dunkel-Grenze für eine vorgegebene Lichtverteilung, wobei eine Sensoreinheit zur Erfassung eines im Vorfeld des Fahrzeugs befindlichen Verkehrsteilnehmers vorgesehen ist, die Stelleinheit in Abhängigkeit von einem Sensorsignal der Sensoreinheit die Blendenwelle derart verdreht, dass eine solche Blendkante der Blendenwelle wirksam ist, dass eine vollständige Ausleuchtung des Vorfeldes erfolgt, ohne den im Vorfeld des Fahrzeugs detektierten Verkehrsteilnehmer zu blenden und die Blendkanten Lichtfunktionssektoren der Blendenwelle zugeordnet sind, die in Drehrichtung der Blendenwelle einen unterschiedlichen Winkelbereich überstreichen.

## Beschreibung

Die Erfindung betrifft eine Projektionsscheinwerferanordnung für Fahrzeuge mit einem linken Projektionsscheinwerfer und mit einem rechten Projektionsscheinwerfer, die jeweils enthalten: einen zwei Brennorte aufweisenden Reflektor, eine in einem ersten Brennort des Reflektors angeordnete Lichtquelle, eine dem Reflektor in Lichtabstrahlrichtung vorgelagerte Linse, deren Brennpunkt in der Nähe des zweiten Brennportes des Reflektors angeordnet ist und eine zwischen der Linse und dem Reflektor angeordnete Blendenwelle, die mittels einer Stelleinheit um eine horizontale und quer zur optischen Achse verlaufenden Drehachse in mehrere Drehstellungen verstellbar ist, wobei den Drehstellungen jeweils eine Blendkante der Blendenwelle zugeordnet ist zur Erstellung einer Hell-Dunkel-Grenze für eine vorgegebene Lichtverteilung.

Aus der EP 0 900 972 A1 ist eine Projektionsscheinwerferanordnung bestehend aus im eckseitigen Bugbereich eines Fahrzeugs angeordneter gleich ausgeführter linker und rechter Projektionsscheinwerfer bekannt, die jeweils über eine Lichtquelle, über einen Reflektor, eine Linse und über eine zwischen der Linse und dem Reflektor angeordnete Blendeneinrichtung verfügen. Die Blendeneinrichtung weist eine Blendenwelle auf, die um ihre eigene Längsachse drehbar in mehrere Drehstellungen verstellbar angeordnet ist. Die Blendenwelle wird mittels einer Stelleinheit um die Drehachse bewegt, die in horizontaler Richtung und quer zur optischen Achse des Projektionsscheinwerfers verläuft. Die Blendenwelle weist vier Blendkanten auf, die in Drehrichtung versetzt um 90° zueinander angeordnet sind. Durch Verdrehen der Blendenwelle in eine Arbeitsstellung, in der eine der Blendkanten wirksam ist, kann eine Hell-Dunkel-Grenze zur Erzeugung eines symmetrischen Abblendlichtes (Basis-, Stadt- oder Schlechtwetterlicht) oder einer asymmetrischen Abblendlicht- oder einer Autobahnlicht- oder einer Fernlichtverteilung gebildet werden. Nachteilig an der bekannten Projektionsscheinwerferanordnung ist, dass die Anzahl der durch die Blendkanten abgebildeten Lichtverteilungen auf vier standardisierte Lichtverteilungen begrenzt ist, die in der jeweiligen Arbeitsstellung eine fixierte Lichtverteilung unabhängig von der aktuellen Verkehrssituation bedeuten.

Aufgabe der vorliegenden Erfindung ist es daher, eine Projektionsscheinwerferanordnung für Fahrzeuge derart weiterzubilden, dass eine möglichst große Ausleuchtung eines Vorfeldes des Fahrzeugs ermöglicht wird, ohne dass ein entgegenkommender und/oder vorausfahrender Verkehrsteilnehmer geblendet wird.

Zur Lösung dieser Aufgabe ist die Erfindung in Verbindung mit dem Oberbegriff des Patentanspruchs 1 **dadurch gekennzeichnet, dass** eine Sensoreinheit zur Erfassung eines im Vorfeld des Fahrzeugs befindlichen Verkehrsteilnehmers vorgesehen ist, dass die Stelleinheit in Abhängigkeit von einem Sensorsignal der Sensoreinheit die Blendenwelle derart verdreht, dass eine solche Blendkante der Blendenwelle wirksam ist, dass eine vollständige Ausleuchtung des Vorfeldes erfolgt, ohne den im Vorfeld des Fahrzeugs detektierten Verkehrsteilnehmer zu blenden und dass die Blendkanten Lichtfunktionssektoren der Blendenwelle zugeordnet sind, die in Drehrichtung der Blendenwelle einen unterschiedlichen Winkelbereich überstreichen.

Der besondere Vorteil der Erfindung ergibt sich aus der Aufteilung einer erfindungsgemäßen Blendenwelle in unterschiedliche Lichtfunktionssektoren, die in Abhängigkeit von der aktuellen Verkehrssituation selbsttätig angesteuert werden, so dass dynamisch die optimale Blendkante wirksam ist zur Erzeugung der Hell-Dunkel-Grenze. Eine Sensoreinheit ermittelt die aktuelle Verkehrssituation, das heißt ermittelt den Ort eines entgegenkommenden und/oder vorausfahrenden Verkehrsteilnehmers, so dass in Abhängigkeit von der aktuellen Position dieses weiteren Verkehrsteilnehmers der Lichtfunktionssektor der Blendenwelle eingestellt wird.

Nach einer bevorzugten Ausführungsform der Erfindung ist ein erster Lichtfunktionssektor als ein adaptiver Lichtfunktionssektor ausgebildet, der sich in einem spitzen oder rechten Winkel um die Drehachse der Blendenwelle erstreckt. An der Mantelfläche des ersten Lichtfunktionssektors erstreckt sich in Längsrichtung der Blendenwelle eine Mehrzahl von Blendkanten, die unterschiedlichen Lichtverteilungen zugeordnet sind. Diese in dem ersten Lichtfunktionssektor zusammengefassten Blendkanten erzeugen standardisierte Lichtverteilungen, die jeweils einen statischen Lichtaussparungsbereich aufweisen. Die Blendkante zur Erzeugung der Abblendlichtverteilung weist einen 15°-Anstieg auf, der eine Blendung des Gegenverkehrs verhindert. Die Blendkanten des linken Projektionsscheinwerfers und des rechten Projektionsscheinwerfers sind lediglich quer zur vertikalen Fahrzeuglängsmittelebene versetzt angeordnet. Dadurch, dass die Blendkanten des ersten Lichtfunktionssektors in einem relativ kleinen Winkel zueinander angeordnet sind, kann eine schnelle Umschaltung zwischen den Lichtfunktionen des ersten Lichtfunktionssektors erfolgen. Vorzugsweise sind Blendkanten zwischen den die standardisierten Lichtverteilungen erzeugenden Standardblendkanten vorgesehen, die Übergangslichtverteilungen erzeugen, so dass kontinuierliche Übergänge zwischen den Standardlichtverteilungen geschaffen werden.

Nach einer Weiterbildung der Erfindung ist ein zweiter Lichtfunktionssektor der Blendenwelle als ein Fernlichtfunktionssektor ausgebildet, der sich über einen Winkelbereich von 180° erstreckt. Die hierfür erforderlichen Blendkanten des linken und rechten Projektionsscheinwerfers sind gleich und quer zur vertikalen Fahrzeuglängsmittelebene versetzt angeordnet. Die Blendkante des zweiten Lichtfunktionssektors weist keinen Lichtaussparungsbereich auf, so dass in dem zweiten Lichtfunktionssektor selbsttätig umgeschaltet wird, sobald kein weiterer Verkehrsteilnehmer detektiert wird.

Nach einer Weiterbildung der Erfindung weist die Blendenwelle einen dritten Lichtfunktionssektor auf, der als Fernlichtentblendungsfunktionssektor dient. Dieser erstreckt sich in einem stumpfen oder rechten Winkelbereich und ist benachbart zu dem ersten Lichtfunktionssektor und dem zweiten Lichtfunktionssektor angeordnet. Die in diesem Lichtfunktionssektor verlaufenden Blendkanten des linken Projektionsscheinwerfers und des rechten Projektionsscheinwerfers verlaufen spiegelverkehrt zur der vertikalen Fahrzeuglängsmittelebene. Vorteilhaft kann hierdurch ein Lichtaussparungsbereich erzeugt werden, der zur Überdeckung mit einem entgegenkommenden und/oder vorausfahrenden Fahrzeug bringbar ist. Bei entsprechender Nachführung der Blendenwelle oder der Projektionsscheinwerfer kann eine dynamische Anpassung des Lichtaussparungsbereiches an die aktuelle Verkehrssituation erfolgen.

Die Aufteilung der Blendenwelle in unterschiedliche Lichtfunktionssektoren ermöglicht, dass in Abhängigkeit von der aktuellen Verkehrssituation eine optimale Ausleuchtung des Fahrzeugvorfeldes ermöglicht wird. In Abhängigkeit von der aktuellen Verkehrssi tuation kann beispielsweise ausgehend von einer Abblendlichtverteilung gemäß einer Blendkante im ersten Lichtfunktionssektor sofort in den zweiten Lichtfunktionssektor zur Erzeugung einer Fernlichtfunktion oder sofort in den dritten Lichtfunktionssektor zur Erzeugung eines blendfreien Fernlichtes umgeschaltet werden.

Nach einer Weiterbildung der Erfindung ist die Blendenwelle um eine vertikale und senkrecht zur optischen Achse stehenden Achse verschwenkbar, so dass der Lichtaussparungsbereich der Blendkante des dritten Lichtfunktionssektors in Abhängigkeit von der detektierten Lage des vorausfahrenden und/oder entgegenkommenden Fahrzeugs (Verkehrsteilnehmer) angepasst werden kann. Stets wird eine umfassende Ausleuchtung des Straßenraums gewährleistet, wobei eine Blendung des vorausfahrenden bzw. entgegenkommenden Fahrzeugs verhindert wird. Für den Fahrzeugführer ergeben sich vorteilhaft keine starken Beleuchtungsdichteschwankungen bzw. starke Kontraste, da der Lichtaussparungsbereich vorzugsweise durch das entgegenkommende selbst leuchtende Fahrzeug ausgefüllt wird. Vorzugsweise wird der Lichtaussparungsbereich dynamisch der aktuellen Position des entgegenkommenden Fahrzeugs nachgeführt, bis das entgegenkommende Fahrzeug das Fahrzeug des Fahrzeugführers seitlich passiert hat. Dann schaltet die Projektionsscheinwerferanordnung schlagartig auf die Fernlichtfunktion um, in der der gesamte Straßenraumbereich über die Breite ausgeleuchtet wird. Erst wenn wieder ein entgegenkommendes oder vorausfahrendes Fahrzeug detektiert wird, wird die Blendenwelle in eine solche Arbeitsstellung gedreht, dass eine angepasste Lichtverteilung erzeugt wird.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Fig. 1: einen schematischen Querschnitt durch eine Blendenwelle nach einer ers- ten Ausführungsform der Erfindung,
- Fig. 2: eine perspektivische Darstellung der Blendenwelle,
- Fig. 3a: ein schematischer Vertikalschnitt durch die Blendenwelle des linken Pro- jektionsscheinwerfers und des rechten Projektionsscheinwerfers, wenn ein Fernlichtentblendungsfunktionssektor (dritter Lichtfunktionssektor) der Blendenwelle wirksam ist,
- Fig. 3b: eine schematische Darstellung einer Lichtverteilung mit einem mittleren Lichtaussparungsbereich in einer Arbeitsstellung der Blendenwelle gemäß Figur 3a,
- Fig. 4a: eine schematische Darstellung einer blendfreien Fernlichtverteilung, bei der die Blendenwelle gemäß Figur 3a bzw. die Projektionsscheinwerfer in Fahrtrichtung aus einer mittleren Stellung nach rechts verstellt worden sind,
- Fig. 4b: eine schematische Darstellung einer blendfreien Fernlichtverteilung, bei der die Blendenwelle gemäß Figur 3a bzw. die die Projektionsscheinwerfer in Fahrtrichtung aus einer mittleren Stellung nach links verstellt worden sind,
- Fig. 4c: eine Darstellung einer blendfreien Fernlichtverteilung mit Blendenwelle gemäß Figur 3a, bei der die Breite des mittleren Lichtaussparungsbereichs durch Verstellen der Blendenwelle in Längsrichtung derselben nach außen vergrößert worden ist,
- Fig. 5a: eine Abblendlichtverteilung gemäß SAE-Norm,
- Fig. 5b: eine Abblendlichtverteilung gemäß ECE-Norm und
- Fig. 6: einen schematischen Querschnitt durch eine Blendenwelle nach einer zweiten Ausführungsform der Erfindung,
- Fig. 7: eine schematische Draufsicht auf ein Fahrzeug mit einer Projektions- scheinwerferanordnung bestehend aus einem rechten Projektionsschein- werfer und einem linken Projektionsscheinwerfer.

Eine erfindungsgemäße Projektionsscheinwerferanordnung 1 besteht im Wesentlichen aus einem linken Projektionsscheinwerfer 2 und einem rechten Projektionsscheinwerfer 3, die jeweils eckseitig an einem Bug eines Fahrzeugs angeordneten Karosserieöffnung eingefasst sind.

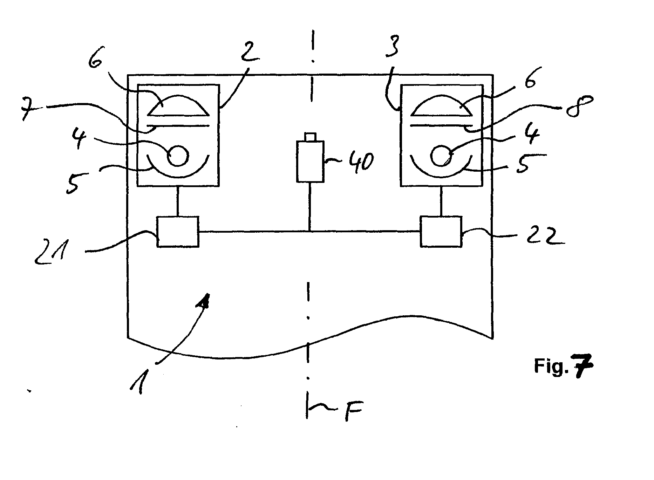

Wie aus Figur 7 zu ersehen ist, weisen der linke Projektionsscheinwerfer 2 und der rechte Projektionsscheinwerfer 3 jeweils einen schalenförmigen Reflektor 5 auf, an dessen ersten Brennort eine Lichtquelle 4 angeordnet ist. In der Nähe eines zweiten Brennortes des Reflektors 5 ist eine Linse 6 angeordnet. Der linke Projektionsscheinwerfer 2 und der rechte Projektionsscheinwerfer 3 weisen die gleichen Blendenwellen 7, 8 auf, die jeweils um eine horizontale Drehachse D verschwenkbar angeordnet sind. Die Drehachse D verläuft horizontal und senkrecht zu einer optischen Achse der Reflektoren 5. Zur Verstellung der Blendenwellen 7, 8 ist denselben eine Stelleinheit 21 bzw. 22 zugeordnet, an deren Eingang ein von einer Sensoreinheit 40 bereitgestelltes Sensorsignal liegt. Die Sensoreinheit 40 kann beispielsweise als ein Kamerasystem ausgebildet sein, dass das gesamte Vorfeld (vorderseitiger Straßenraum) des Fahrzeugs erfasst und mögliche Fahrzeuge P detektiert. Die Sensoreinheit 40 ist derart aufgebaut, dass sich die Lage und/oder die Entfernung der Projektionsscheinwerfer 2, 3 zu einem entgegenkommenden und/oder vorausfahrenden Verkehrsteilnehmer (Fahrzeug) im Vorfeld erfasst. Die Stelleinheit 21 kann einen Mikrokontroller bzw. einen Mikroprozessor mit einem Speicher umfassen, in dem ein Lichtsteuerungsprogramm integriert ist.

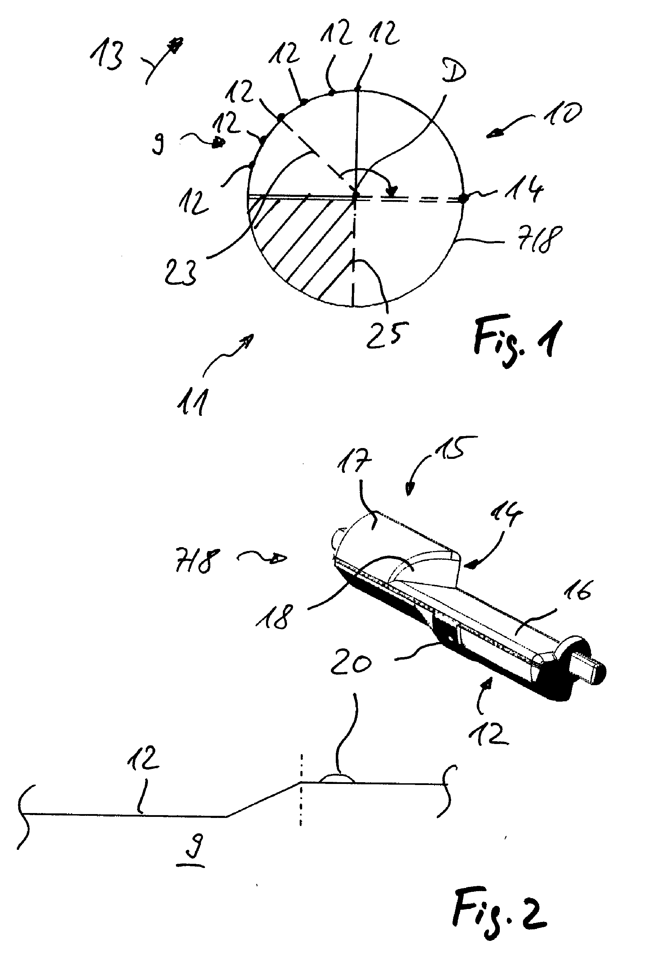

Nach einer ersten Ausführungsform der Erfindung gemäß Figur 1 weist die Blendenwelle 7, 8 einen ersten Lichtfunktionssektor 9, einen zweiten Lichtfunktionssektor 10 sowie einen dritten Lichtfunktionssektor 11 auf.

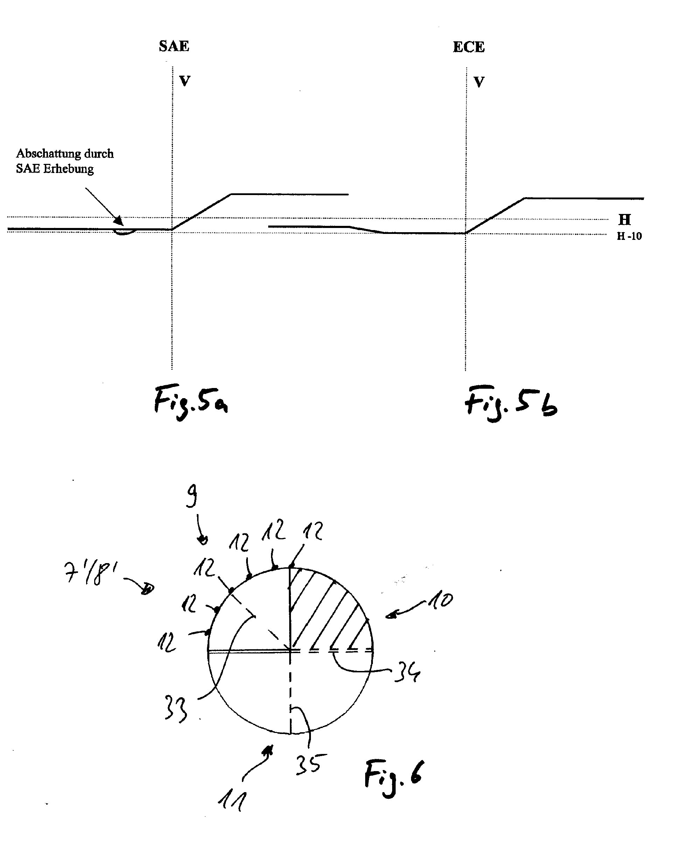

Der erste Lichtfunktionssektor 9 ist als ein adaptiver Abblendlichtfunktionssektor ausgebildet, der sich in einem rechten Winkel um die Drehachse D der Blendenwelle 7, 8 erstreckt und der an einer Mantelfläche desselben eine Mehrzahl von Blendkanten 12 aufweist, deren Kontur unterschiedlichen Lichtverteilungen mit einem statischen Aus sparungsbereich zugeordnet sind. Die Mantelfläche der Blendenwelle 7, 8 in dem ersten Lichtfunktionssektor 9 weist somit eine Mehrzahl von Blendkanten 12 auf, wobei benachbarte Blendkanten 12 um einen relativ kleinen Winkel, beispielsweise 5 bis 10° versetzt zueinander angeordnet sind. Vorzugsweise sind die Blendkanten 12 des ersten Lichtfunktionssektors 9 gleich verteilt über die Mantelfläche des ersten Lichtfunktionssektors 9 in Umfangsrichtung angeordnet. Eine erste Blendkante 12 kann derart konturiert sein, dass eine Hell-Dunkel-Grenze zur Erzeugung einer asymmetrischen Abblendlichtverteilung für Rechtsverkehr gemäß ECE-Norm erzeugt wird, siehe Figur 5b. Eine zweite Blendkante 12 kann derart konturiert sein, dass eine Hell-Dunkel-Grenze für eine Stadtlichtverteilung erzeugt wird. Eine dritte Blendkante 12 kann derart konturiert sein, dass eine Hell-Dunkel-Grenze für eine Landstraßenlichtverteilung erzeugt wird. Eine vierte Blendkante 12 kann derart konturiert sein, dass eine Hell-Dunkel-Grenze für eine Autobahnlichtverteilung erzeugt wird. Eine fünfte Blendkante 12 kann derart konturiert sein, dass eine Hell-Dunkel-Grenze für Abblendlichtverteilung für Linksverkehr erzeugt wird. Zwischen einer oder mehreren der vorgenannten Blendkanten 12 können zusätzliche weitere Blendkanten 12 vorgesehen sein, die zur Erzeugung einer Übergangslichtverteilung dienen. Hierdurch wird ein kontinuierlicher Übergang geschaffen zwischen den verschiedenen Lichtverteilungen des adaptiven Lichtfunktionssektors 9. Zusätzlich kann der erste Lichtfunktionssektor 9 eine weitere Blendkante 12 aufweisen zur Erzeugung einer Hell-Dunkel-Grenze für eine asymmetrische Abblendlichtverteilung für SAE-Norm. Zu diesem Zweck weist die Blendenwelle 7, 8 eine Erhebung 20 auf. In einer ersten Drehrichtung 13 benachbart zu dem ersten Lichtfunktionssektor 9 ist der zweite Lichtfunktionssektor 10 angeordnet, der als ein Fernlichtfunktionssektor ausgebildet ist. Er erstreckt sich in einem Winkelbereich von 180°. Der Fernlichtfunktionssektor 10 weist eine Blendkante 14 auf, die eben ausgebildet ist und eine umfassende Ausleuchtung des Fahrzeugvorfeldes ermöglicht.

In Drehrichtung 13 vor dem zweiten Lichtfunktionssektor 10 ist der dritte Lichtfunktionssektor 11 als ein Fernlichtentblendungsfunktionssektor angeordnet, der sich in einem rechten Winkelbereich zwischen dem ersten Lichtfunktionssektor 9 und dem zweiten Lichtfunktionssektor 10 erstreckt. Der Fernlichtentblendungsfunktionssektor 11 weist eine Blendkante 15 auf, die einen ebenen Abschnitt 16 und einen sich von einer Längsrandseite des ebenen Abschnitts 16 bogenförmig erhebenden Bogenab

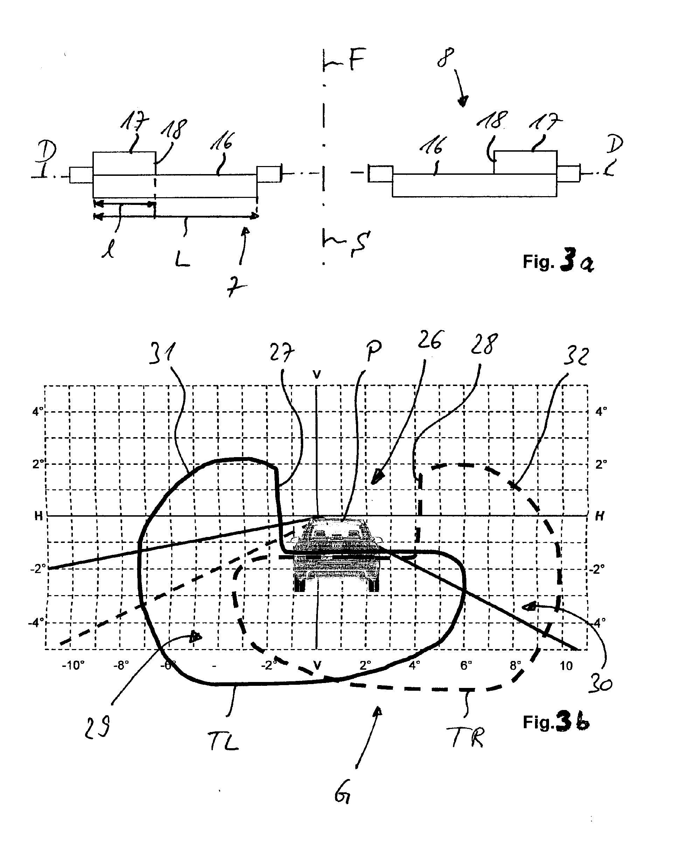

schnitts 17 besteht, wobei sich der Bogenabschnitt 17 stirnseitig an den ebenen Abschnitt 16 anschließt. Wie aus Figur 3a zu erkennen ist, sind die Blendenwellen 7, 8 des linken Projektionsscheinwerfers bzw. des rechten Projektionsscheinwerfers 3 in dieser Arbeitsstellung spiegelverkehrt zu einer vertikalen Fahrzeuglängsmittelebene F angeordnet, wobei sich der ebene Abschnitt 16 auf einer der Fahrzeuglängsmittelebene F zugewandten Seite und der Bogenabschnitt 17 auf einer der Fahrzeuglängsmittelebene F abgewandten Seite verlaufen.

Die Erfindung ermöglicht eine relativ schnelle und dynamische Anpassung der Lichtverteilungen an die aktuelle Verkehrssituation, wobei eine maximale Ausleuchtung des Verkehrsraums gewährleistet ist. Beispielsweise kann ausgehend von einer ersten Arbeitsstellung 23 der Blendenwelle 7, 8, in der mittels der Blendkante 12 eine asymmetrische Abblendlichtverteilung abgebildet wird, weil mittels der Sensoreinheit 40 ein entgegenkommendes Fahrzeug detektiert worden ist, in eine zweite Arbeitsstellung 24 verbracht werden, in der die Blendkante 14 des zweiten Lichtfunktionssektors 10 wirksam ist, nachdem erkannt worden ist, dass das entgegenkommende Fahrzeug die Projektionsscheinwerferanordnung 1 passiert hat. Die Arbeitsstellungen sind gestrichelt in Figur 1 eingezeichnet. Dem Fahrzeugführer wird somit eine umfassende Ausleuchtung des Fahrzeugvorfeldes ermöglicht, nachdem das Fehlen von entblendenden weiteren Fahrzeugen im Vorfeld erkannt worden ist.

Sofern ein weiteres Fahrzeug in das Vorfeld und die Spur des Fahrzeugs einbiegt, können die Blendenwellen 7, 8 in eine dritte Arbeitsstellung 25 verdreht werden, dass der dritte Lichtfunktionssektor 11 wirksam wird. Wie oben bereits beschrieben, sind die Blendenwellen 7, 8 in dem dritten Lichtfunktionssektor 11 spiegelverkehrt bezüglich einer vertikalen Spiegelebene S angeordnet, wobei zwischen dem ebenen Abschnitt 16 und dem Bogenabschnitt 17 der Blendenwellen 7, 8 eine Sprungfläche 18 gebildet ist. Wie aus Figur 3b ersichtlich ist, überlagern sich eine durch den linken Projektionsscheinwerfer 2 erzeugte erste Teillichtverteilung (linke Teillichtverteilung TL) und eine durch den rechten Projektionsscheinwerfer 3 gebildete zweite Teillichtverteilung (rechte Teillichtverteilung TR - gestrichelt gezeichnet - ) zu einer Gesamtlichtverteilung G, die in der Mitte einen mittleren Lichtaussparungsbereich 26 aufweist. Der mittlere Lichtaussparungsbereich 26 wird durch eine erste Flanke 27 der ersten Teil lichtverteilung TL und eine zweite Flanke 28 der zweiten Teillichtverteilung TR begrenzt. Die Gesamtlichtverteilung G entspricht einer herkömmlichen Fernlichtverteilung mit dem Unterschied, dass ein mittlerer Bereich, in dem sich die Vertikale V erstreckt, von der Ausleuchtung ausgespart ist. Hierdurch kann die Blendung eines im mittleren Straßenraum befindlichen vorausfahrenden Fahrzeugs P verhindert werden, ansonsten aber eine umfassende Ausleuchtung des Straßenraums gewährleistet sein. Die erste Teillichtverteilung TL und die zweite Teillichtverteilung TR weisen jeweils einen Basisleuchtbereich 29 bzw. 30 auf, wobei benachbart zu dem Basisleuchtbereich 29 der linken Teillichtverteilung TL auf einer linken Seite ein linker Leuchtfingerbereich 31 und benachbart zu dem Basisleuchtbereich 30 der rechten Teillichtverteilung TR auf einer rechten Seite ein rechter Leuchtfingerbereich 32 einen hinteren Straßenbereich ausleuchten.

Wie aus Figur 3a ersichtlich ist, ist die Länge I des äußeren Bogenabschnitts 17 kleiner als die halbe Länge L der Blendenwelle 7, 8.

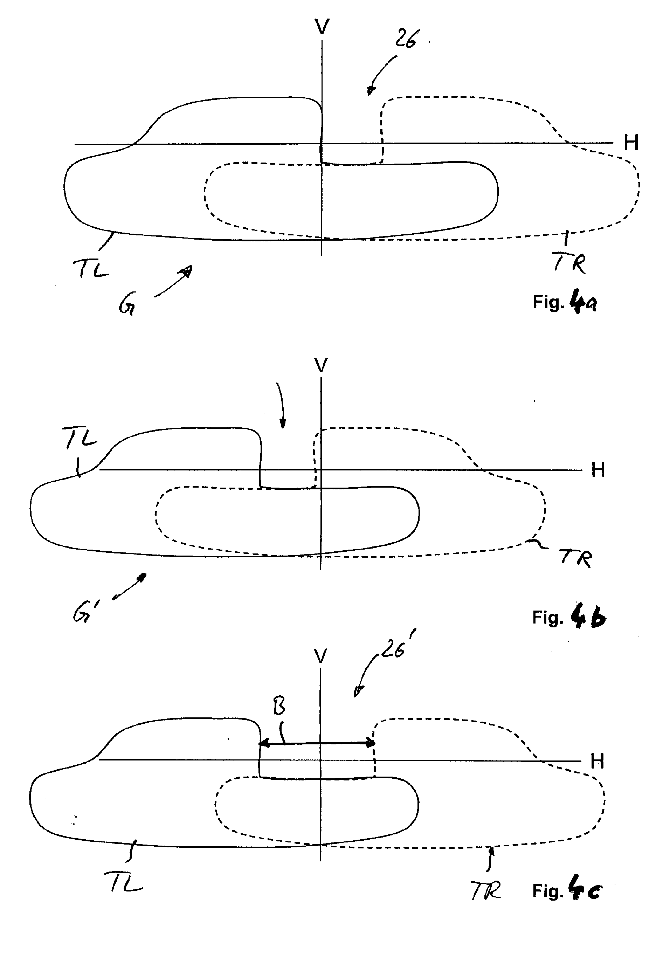

In der gemäß dritten Lichtfunktionssektor 11 befindlichen Arbeitsstellung der Blendenwelle 7, 8 kann eine dynamische Anpassung der Gesamtlichtverteilung G in Abhängigkeit von der Lage der weiteren Verkehrsteilnehmer erfolgen. Wie aus Figur 4a ersichtlich ist, kann die Gesamtlichtverteilung G durch Verdrehen der Blendenwellen 7, 8 um eine vertikale Achse, die senkrecht zur Fahrzeuglängsachse verläuft, in Fahrtrichtung nach rechts verschwenkt werden, so dass der Lichtaussparungsbereich 26 rechts von der Vertikalen V angeordnet ist. Bei einer Verschwenkung der Blendenwellen 7, 8 nach links wandert der Lichtaussparungsbereich 26 nach links, so dass eine Gesamtlichtverteilung G' gemäß Figur 4b erzeugt wird. Zur Bildung einer größeren Breite B des mittleren Aussparungsbereiches 26 werden die Blendenwellen 7, 8 bzw. die Projektionsscheinwerfer 2, 3 in entgegengesetzter Richtung nach außen verschwenkt und zwar der linke Projektionsscheinwerfer 2 nach links und der rechte Projektionsscheinwerfer 3 nach rechts. Hierdurch kann ein verbreiterter Lichtaussparungsbereich 26' gemäß Figur 4c geschaffen werden, so dass die Entblendung von breiteren vorausfahrenden Fahrzeugen oder mehreren nebeneinander angeordneten Fahrzeugen ermöglicht wird.

Nach einer zweiten Ausführungsform einer Blendenwelle 7', 8' gemäß Figur 6 kann der dritte Lichtfunktionssektor 11 auch in Drehrichtung 13 benachbart zu dem ersten Lichtfunktionssektor 9 angeordnet sein. Befindet sich beispielsweise die Blendenwelle 7', 8' in einer ersten Arbeitsstellung 33 - wie bei dem vorhergehenden Ausführungsbeispiel -, kann bei Detektion eines vorausfahrenden Fahrzeugs die Blendenwelle 7', 8' in Drehrichtung 13 relativ schnell von der asymmetrischen Abblendlichtfunktion in die blendfreie Fernlichtfunktion gemäß zweiter Arbeitsstellung 34 verstellt werden. Biegt beispielsweise das vorausfahrende Fahrzeug dann aus der Spur des Fahrzeugs ab, kann von der blendfreien Fernlichtfunktion (zweite Arbeitsstellung 34) in die dritte Arbeitsstellung 35 (Fernlichtfunktion im zweiten Lichtfunktionssektor 10) geschaltet werden. Die Anordnung der Lichtfunktionssektoren 9, 10, 11 kann je nach gewünschtem Lichtfunktionsabfolgeschema unterschiedlich angeordnet sein. Beispielsweise kann die Blendenwelle 7, 8 bzw. 7', 8' auch entgegen der Drehrichtung 13 betrieben werden.

### Bezugszeichenliste

- 1: Projektionsscheinwerferanordnung
- 2: linker Projektionsscheinwerfer
- 3: rechter Projektionsscheinwerfer
- 4: Lichtquelle
- 5: Reflektor
- 6: Linse
- 7, 7': Blendenwelle
- 8, 8': Blendenwelle
- 9: erster Lichtfunktionssektor
- 10: zweiter Lichtfunktionssektor
- 11: dritter Lichtfunktionssektor
- 12: Blendkanten
- 13: erste Drehachse
- 14: Blendkante
- 15: Blendkante
- 16: ebener Abschnitt
- 17: Bogenabschnitt
- 18: Sprungfläche
- 20: Erhebung
- 21: Stelleinheit
- 22: Stelleinheit
- 23: erste Arbeitsstellung
- 24: zweite Arbeitsstellung
- 26: Lichtübergangsbereich
- 27: erste Flanke
- 28: zweite Flanke
- 29: Basisleuchtbereich
- 30: Basisleuchtbereich
- 31: Leuchtführungsabschnitt
- 32: Leuchtführungsabschnitt
- 33: erste Arbeitsstellung
- 34: zweite Arbeitsstellung
- 35: dritte Arbeitsstellung
- 40: Sensoreinheit
- D: Drehachse
- F: Fahrzeuglängsmittelebene
- B: Breite
- P: Fahrzeug
- S: Spiegelebene
- G, G': Gesamtlichtverteilung
- TL: linke Teillichtverteilung
- TR: rechte Teillichtverteilung
- L: Länge

## Patentansprüche

1. Projektionsscheinwerferanordnung für Fahrzeuge mit einem linken Projektionsscheinwerfer und mit einem rechten Projektionsscheinwerfer, die jeweils enthalten:
- einen zwei Brennorte aufweisenden Reflektor,
- eine in einem ersten Brennort des Reflektors angeordnete Lichtquelle,
- eine dem Reflektor in Lichtabstrahlrichtung vorgelagerte Linse, und
- eine zwischen der Linse und dem Reflektor angeordnete Blendenwelle, die mittels einer Stelleinheit um eine horizontale und quer zur optischen Achse verlaufenden Drehachse in mehrere Drehstellungen verstellbar ist, wobei den Drehstellungen jeweils eine Blendkante der Blendenwelle zugeordnet ist zur Erstellung einer Hell-Dunkel-Grenze für eine vorgegebene Lichtverteilung,
**dadurch gekennzeichnet,**
- **dass** eine Sensoreinheit (40) zur Erfassung eines im Vorfeld des Fahrzeugs befindlichen Verkehrsteilnehmers vorgesehen ist,
- **dass** die Stelleinheit (21, 22) in Abhängigkeit von einem Sensorsignal der Sensoreinheit (40) die Blendenwelle (7, 8; 7', 8') derart verdreht, dass eine solche Blendkante (12, 14, 15) der Blendenwelle (7, 8; 7', 8') wirksam ist, dass eine vollständige Ausleuchtung des Vorfeldes erfolgt, ohne den im Vorfeld des Fahrzeugs detektierten Verkehrsteilnehmer zu blenden und
- **dass** die Blendkanten (12, 14, 15) Lichtfunktionssektoren (9, 10, 11) der Blendenwelle (7, 8; 7', 8') zugeordnet sind, die in Drehrichtung (13) der Blendenwelle (7, 8; 7', 8') einen unterschiedlichen Winkelbereich überstreichen.

2. Projektionsscheinwerferanordnung nach Anspruch 1, **dadurch gekennzeichnet, dass** ein erster Lichtfunktionssektor (9) als ein adaptiver Abblendlichtfunktionssektor ausgebildet ist, der sich über einen spitzen oder rechten Winkel um die Drehachse (D) der Blendenwelle (7, 8; 7', 8') erstreckt und der eine Mehrzahl von Blendkanten (12) aufweist zur Erzeugung einer Abblendlichtverteilung und/oder einer Stadtlichtverteilung und/oder einer Landstraßenlichtverteilung und/oder einer Autobahnlichtverteilung und/oder einer Übergangslichtverteilung und/oder einer Abblendlichtverteilung für Rechtsverkehr und/oder einer Abblendlichtverteilung für Linksverkehr.

3. Projektionsscheinwerferanordnung nach Anspruch 1 oder 2, **dadurch gekennzeichnet, dass** ein zweiter Lichtfunktionssektor (10) als ein Fernlichtfunktionssektor ausgebildet ist, der sich über einen Winkelbereich von 180° erstreckt, der benachbart zu dem ersten Lichtfunktionssektor angeordnet ist und der über eine Blendkante (14) verfügt zur Erzeugung einer Fernlichtverteilung.

4. Projektionsscheinwerferanordnung nach einem der Ansprüche 1 bis 3, **dadurch gekennzeichnet, dass** ein dritter Lichtfunktionssektor (11) als ein Fernlichtentblendungssektor ausgebildet ist, der sich in einem stumpfen oder rechten Winkelbereich erstreckt, der benachbart zu dem ersten Lichtfunktionssektor und dem zweiten Lichtfunktionssektor angeordnet ist und der eine Blendkante (15) aufweist zur Erzeugung einer blendfreien Fernlichtverteilung.

5. Projektionsscheinwerferanordnung nach Anspruch 4, **dadurch gekennzeichnet, dass** die mindestens eine Blendenkante (15) des dritten Lichtfunktionssektors (11) derart ausgebildet ist, dass mittels der Blendkante (7. 7') des linken Projektionsscheinwerfers (2) eine erste Teillichtverteilung (TL) und mittels der Blendkante (8, 8') des rechten Projektionsscheinwerfers (3) eine zweite Teillichtverteilung (TR) abgebildet wird, die sich zu einer Gesamtlichtverteilung (G, G') überlagern, wobei die Gesamtlichtverteilung (G, G') einen Lichtaussparungsbereich (26) aufweist, der von gegenüberliegenden seitlichen zwei Flanken (27, 28) begrenzt ist, wobei die erste Flanke (27) durch die erste Teillichtverteilung (TL) und die zweite Flanke (28) durch die zweite Teillichtverteilung (TR) gebildet ist.

6. Projektionsscheinwerferanordnung nach einem der Ansprüche 1 bis 5, **dadurch gekennzeichnet, dass** der linke Projektionsscheinwerfer (2) und der rechte Projektionsscheinwerfer (3) die gleiche Blendenwelle (7, 8; 7', 8') aufweisen, wobei die in dem dritten Lichtfunktionssektor (11) befindliche Blendkante (15) bezüglich einer zwischen dem linken Projektionsscheinwerfer (2) und dem rechten Projektionsscheinwerfer (3) verlaufende vertikale Fahrzeuglängsmittelebene (F) spiegelverkehrt angeordnet sind.

7. Projektionsscheinwerferanordnung nach einem der Ansprüche 1 bis 6, **dadurch gekennzeichnet, dass** die Blendenwelle (7, 8; 7', 8') in einer Arbeitsstellung, in der die Blendkante (15) des dritten Lichtfunktionssektors (11) wirksam ist, synchron oder zeitversetzt in Abhängigkeit von der aktuellen Position des weiteren Fahrzeugs im Vorfeld um eine vertikale Achse verschwenkbar ist, derart, dass das Fahrzeug im Vorfeld stets in dem Lichtaussparungsbereich (26) der Gesamtlichtverteilung (G, G') befindet.

8. Projektionsscheinwerferanordnung nach einem der Ansprüche 1 bis 7, **dadurch gekennzeichnet, dass** der erste Lichtfunktionssektor (9) mindestens eine Blendkante (12) mit einer Erhebung (20) zur Bildung einer Hell-Dunkel-Grenze aufweist, so dass eine asymmetrische Abblendlichtverteilung entsprechend einer SAE-Norm erzeugt wird.

9. Projektionsscheinwerferanordnung nach einem der Ansprüche 1 bis 8, **dadurch gekennzeichnet, dass** die Blendkante (15) aus einem ebenen Abschnitt (16) und einem stirnseitig anschließenden Bogenabschnitt (17) gebildet ist, wobei sich der Bogenabschnitt (17) in Drehrichtung (13) bogenförmig von einem längsseitigen Rand des ebenen Abschnitts (16) erstreckt.

10. Projektionsscheinwerferanordnung nach einem der Ansprüche 1 bis 9, **dadurch gekennzeichnet, dass** zwischen dem ebenen Abschnitt (16) und dem Bogenabschnitt (17) der Blendkante (15) eine Sprungfläche (18) gebildet ist, die senkrecht zur Drehachse (D) der Blendenwelle (7, 8; 7', 8') verläuft.
